# EUROPÄISCHE PATENTSCHRIFT

(11) **EP 2 253 519 B1**
(45) Veröffentlichungstag und Bekanntmachung des Hinweises auf die Patenterteilung: **08.07.2015**
(21) Anmeldenummer: 10163146.3
(22) Anmeldetag: 18.05.2010
(51) Int. Cl.: B60R 25/02

(54) **Vorrichtung zur Ansteuerung eines Sperrgliedes**
Device for operating a blocking element
Dispositif de commande d'un organe de verrouillage

(30) Priorität: 19.05.2009 DE 102009021998
(43) Veröffentlichungstag der Anmeldung: 24.11.2010
(73) Patentinhaber: Huf Hülsbeck & Fürst GmbH & Co. KG, 42551 Velbert (DE)
(72) Erfinder: Thronberens, Stefan, 86559, Adelzhausen (DE); Polan, Ingo, 97525 Schwäbheim (DE)
(74) Vertreter: Vogel, Andreas

(56) Entgegenhaltungen:
- FR-A- 1 508 681
- FR-A1- 2 463 249

## Beschreibung

Die Erfindung betrifft eine Vorrichtung zur Ansteuerung eines Sperrgliedes einer Lenksäule eines Kraftfahrzeuges, mit einem Schließzylinder, der ein Gehäuse und ein darin aufgenommenen, um eine Achse drehbaren Zylinderkern aufweist, der aus einer Nullstellung in weitere, zueinander winkelversetzte Stellungen, wie eine Zwischenstellung und eine Endstellung drehbar ist, einem Steuerglied, das mit dem Sperrglied mechanisch gekoppelt ist, so dass bei Drehung des Zylinderkerns um die erste Achse das Sperrglied zwischen einer Verriegelungsstellung und einer Entriegelungsstellung bringbar ist, einem Schalter, der entsprechend der Stellung des Zylinderkerns unterschiedliche Betriebszustände des Kraftfahrzeuges bestimmt, wobei in der Zwischenstellung der Fahrzeugmotor aktiv ist, nachdem vorausgehend in der Endstellung eine Zündung des Fahrzeugmotors erfolgt ist, und einer Anlasswiederholsperre, die bei aktiviertem Fahrzeugmotor auf den Zylinderkern wirkt, wodurch eine erneute Drehung des Zylinderkerns in die Endstellung verhindert wird.

Aus dem Stand der Technik ist es bekannt, Schließzylinder aus einem Zylindergehäuse und einem darin mit seinen Zuhaltungen aufgenommenen Zylinderkern zu verwenden. Der Zylinderkern steht in Wirkverbindung mit einem Schalter, insbesondere Zündschalter, und kann mittels eines eingesteckten Schlüssels aus einer sperrwirksamen Nullstellung in weitere zueinander winkelversetzte Stellungen überführt werden. Um die Drehrichtungen voneinander unterscheiden zu können, sollen nachfolgend wegen der entsprechenden, am Schalter vollzogenen Funktionen, eine von der Nullstellung weggerichtete Drehung als im "Einschaltsinn" erfolgend bezeichnet werden, während umgekehrt, eine auf die Nullstellung zugerichtete als im "Ausschaltsinn" ausgeführt gelten.

Wenn der Zylinderkern sich in der Nullstellung befindet und der Schlüssel abgezogen ist, befindet sich das Sperrglied in der Verriegelungsstellung. In allen übrigen Drehstellungen und bei in Nullstellung noch steckendem Schüssel ist das Sperrglied in der Entriegelungsstellung. Im Gegensatz zur Verriegelungsstellung, bei der eine Bewegung der Lenksäule blockiert ist, weist das Sperrglied in der Entriegelungsstellung einen definierten Abstand zur Lenksäule auf. Zur Bewegung des Sperrgliedes dient das Steuerglied, welches in Wirkverbindung zum Sperrglied steht.

In der DE 42 19 846 C2 ist ein Lenkschloss mit einer Anlasswiederholsperre offenbart. Die Anlasswiederholsperre bewirkt, dass der Schlüssel nach einem vorangegangenen Startversuch aus der Endstellung über die benachbarte Zwischenstellung hinweg erst wieder in die Nullstellung zurückgedreht werden muss, bevor mit einem neuen Startvorgang begonnen werden kann. Die Anlasswiederholsperre ist als einstückige, winkelförmige Blattfeder ausgeführt, die aus zwei Schenkeln besteht. Der eine Winkelschenkel wird beidendig an ortsfesten Lagerstellen festgehalten, wobei die eine Lagerstelle im Scheitelbereich zwischen den beiden Schenkeln angreift. Die Blattfeder weist hierbei zwei Enden auf. Das erste Ende der Blattfeder ist an einer Lagerstelle befestigt. Das zweite Ende der Blattfeder lässt sich aufgrund der Biegeelastizität entsprechend auslenken, wobei in der Zwischenstellung des Zylinderkerns die Blattfeder mit ihrem zweiten freien Ende derart auf den Zylinderkern wirkt, dass bei einem aktivierten Fahrzeugmotor eine erneute Drehung des Zylinderkerns in die Endstellung verhindert wird. Nachteiligerweise hat es sich gezeigt, dass ein derartiges Lenkschloss platzaufwendig ist.

Die Dokumente FR 1 508 681 und FR 2 463 249 offenbaren Vorrichtungen zur Ansteuerung eines Spergliedes einer Lenksäule.

Aufgabe der vorliegenden Erfindung ist es, eine Vorrichtung zur Ansteuerung eines Sperrgliedes zu schaffen, die die genannten Nachteile vermeidet, insbesondere eine Vorrichtung mit einer Anlasswiederholsperre geschaffen wird, die kompakt aufgebaut ist, wobei gleichzeitig nach einem vorangegangenen Startversuch eine Bewegung des Zylinderkerns aus der Zwischenstellung in die Endstellung zuverlässig verhindert wird.

Zur Lösung dieser Aufgabe wird eine Vorrichtung den Merkmalen des Anspruches 1 vorgeschlagen. In den abhängigen Ansprüchen sind bevorzugte Weiterbildungen ausgeführt. Dazu ist erfindungsgemäß vorgesehen, dass die Anlasswiederholsperre ein Blockierelement umfasst, wobei die Anlasswiederholsperre axial zur ersten Achse angeordnet ist.

Der Kern der Erfindung ist, dass die Anlasswiederholsperre einschließlich ihres Blockierelementes sich möglichst axial um das benachbarte angeordnete Steuerglied erstreckt, wobei ein kompakter und platzsparender Gesamtaufbau erzielbar ist. Im Einschaltsinn als auch im Ausschaltsinn führt das Blockierelement eine Schwenkbewegung mit einem geringen Hub aus, welches eine platzsparende Konstruktion der erfindungsgemäßen Vorrichtung begünstigt. Hierbei reicht es aus, dass das Blockierelement, welches vorzugsweise federbelastet ist, nur um wenige Winkelbeträge bewegt werden muss, um in der Zwischenstellung des Zylinderkerns eine erneute Drehung des Zylinderkerns in die Endstellung zuverlässig zu verhindern. Vorteilhafterweise ist das Blockierelement um eine zur ersten Achse beabstandete zweite Achse schwenkbar gelagert.

Erfindungsgegemäß ist die Anlasswiederholsperre koaxial zur ersten Achse angeordnet. Hierbei kann es ausreichend sein, dass die Anlasswiederholsperre nur sich um einen definierten Winkelabstand um das Steuerglied und um die erste Achse des Zylinderkerns erstreckt. Vorteilhafterweise liegt das Blockierelement sowohl im Einschaltsinn als auch im Ausschaltsinn stets am Steuerglied an, wobei zweckmäßigerweise die Anlasswiederholsperre mehrteilig ausgeführt ist und ein bogenförmiges Federelement auf das Blockierelement wirkt, wodurch das Blockierelement stets das Steuerglied kontaktiert. Um eine kompakte Bauform auch in diesem Ausführungsbeispiel sicherzustellen, ist das Federelement, das auf das Blockierelement mit einer definierten Kraft wirkt, bogenförmig um das Steuerglied verlaufend angeordnet. Somit erstreckt sich das Federelement ebenfalls axial um die erste Achse des Zylinderkerns.

Erfindungsgemäß das Blockierelement gleichzeitig als Federelement ausgeführt ist, das bogenförmig um das Steuerglied verläuft. Das bedeutet, dass hierdurch ein Bauteil in der Gesamtkonstruktion eingespart werden kann. Das gleichzeitig als Federelement wirkende Blockierelement kann um seine zweite Achse entsprechend der Drehung des Zylinderkerns im Einschaltsinn als auch im Ausschaltsinn bewegbar sein, wobei vorzugsweise das Blockierelement mit seinem freien Ende am Steuerglied kontaktierend entlang gleitet und in der Zwischenstellung derart am Steuerglied angreift, dass eine Anlasswiederholung ausgeschlossen ist.

Eine die Erfindung verbessernde Maßnahme sieht vor, dass in der Nullstellung des Zylinderkerns das Blockierelement sich in einer Ruhelage befindet, in der Zwischenstellung und/oder Endstellung des Zylinderkerns das Blockierelement sich in einer Sperrlage befindet, wobei das Steuerglied mit einer Kontur ausgeführt ist, die während der Bewegung des Zylinderkerns in seine jeweilige Stellung auf das Blockierelement wirkt, so dass das Blockierelement sich in eine Richtung aus der Ruhelage in die Sperrlage bewegt, die im wesentlichen zur ersten Achse des Zylinderkerns gerichtet ist. Im Gegensatz zum Stand der Technik DE 42 19 846 C2 nähert sich das Blockierelement ausgehend von seiner Ruhelage in die Sperrlage der ersten Achse des Zylinderkerns an, wodurch eine erhöhte Sicherheit zur Verhinderung einer Anlasswiederholung beschaffen wird. Hierbei bewirkt die auf das Blockierelement wirkende Federkraft, dass das Blockierelement in seiner Sperrlage zuverlässig verbleibt.

Erfindungsgemäß ist es denkbar, dass der Zylinderkern und das Steuerglied ein gemeinsames Bauteil bilden. Hierbei ist der Zylinderkern ebenfalls mit einer entsprechenden Kontur ausgeführt, die während der Drehung des Zylinderkerns im Einschaltsinn oder im Ausschaltsinn auf das Blockierelement wirkt, welches wiederum zwischen seiner Ruhelage und seiner Sperrlage sich bewegt. Alternativ dazu kann der Zylinderkern mit dem Steuerglied drehfest verbunden sein.

Eine die Erfindung verbessernde Maßnahme sieht vor, dass ein Schaltring am Steuerglied beweglich angeordnet ist, insbesondere das das Steuerglied an seinem Randbereich, der dem Blockierelement zugewandt ist, mit einer Ausnehmung ausgeführt ist, in der der Schaltring beweglich gelagert ist. Vorteilhafterweise weist die Ausnehmung eine Nut auf, in die der Schaltring mit einem Fußbereich hineinragt. Somit ist der Schaltring in der Ausnehmung zuverlässig gelagert.

Die Ausnehmung des Steuergliedes kann einen ersten und einen zweiten Anschlag aufweisen, wobei der Schaltring ein erstes Ende und ein zweites Ende aufweist, wobei das erste Ende des Schaltringes dem ersten Anschlag und das zweite Ende des Schaltringes dem zweiten Anschlag zugewandt ist, wobei die Ausnehmung nur teilweise durch den Schaltring ausgeführt ist. Der Schaltring ist im Wesentlichen der geometrischen Kontur der Ausnehmung ausgefüllt. Entsprechend der Drehung des Zylinderkerns im Einschaltsinn oder im Ausschaltsinn dient der Schaltring im Wesentlichen der Führung der Bewegung des Blockierelementes.

In einer bevorzugten Ausführungsform der Erfindung weist das Steuerglied einen radial nach außen verlaufenden Nocken auf, der in Nullstellung und in Endstellung an einem Anschlag des Gehäuses anliegt. Somit wird eine Überdrehung im Einschaltsinn als auch im Ausschaltsinn des Zylinderkerns zuverlässig verhindert. Der Nocken kann beispielsweise vorsprungartig radial nach außen sich erstrecken. Alternative geometrische Ausführungsalternativen des Nockens sind selbstverständlich denkbar.

Vorzugsweise weist das Steuerglied an seinem Randbereich eine Einbuchtung auf, in die sich das Blockierelement in der Zwischenstellung des Zylinderkerns erstreckt, insbesondere die Einbuchtung eine Steuerkurve aufweist, die am Blockierelement während der Bewegung des Zylinderkerns von seiner Zwischenstellung in die Nullstellung derart angreift, dass das Blockierelement aus seiner Sperrlage in die Ruhelage sich verschwenkt. Hierbei kann bei einer Bewegung des Zylinderkerns aus seine Nullstellung in Richtung Endstellung der Schaltring mit seinem zweien Endes am zweiten Anschlag anliegen und gleichzeitig die Einbuchtung verdecken, wobei das erste Ende des Schaltringes zum ersten Anschlag beabstandet ist.

Vorteilhafterweise dient bei der Bewegung des Zylinderkerns aus der Endstellung in die Zwischenstellung der Vorsprung des Schaltringes als Anschlagelement für das Blockierelement, um den Schaltring in Richtung des ersten Anschlages des Steuergliedes zu bewegen, wodurch gleichzeitig der Schaltring mit seinem zweiten Ende die Einbuchtung verlässt und das Blockierelement in die Einbuchtung eintauchen. Während das Blockierelement aus der Endstellung in die Zwischenstellung sich zurückbewegt, gleitet es entlang des Randbereiches des Steuergliedes ab, wobei es sich gleichzeitig aus seiner Sperrlage in die Ruhelage zurückverschwenkt hat. Hierbei rotieren das Steuerglied sowie der Zylinderkern in Richtung Zwischenstellung, wobei gleichzeitig der Schaltring innerhalb der Ausnehmung des Steuergliedes sich mitbewegt. Ab einer gewissen Drehposition des Steuergliedes kontaktiert das Blockierelement den Vorsprung des Schaltringes. Während das Steuerglied sich weiter in Richtung Zwischenstellung um die erste Achse des Zylinderkerns bewegt, verhindert das am Vorsprung anliegende Blockierelement, dass der Schaltring sich mit dem Steuerglied bewegt. Hierdurch öffnet sich die in der Ausnehmung ausgeführte Einbuchtung, in die das Blockierelement sich verschwenkt und dort seine Sperrlage einnimmt, wenn die Zwischenstellung des Zylinderkerns erreicht ist.

In einer möglichen Ausführungsform der Erfindung kann der Zylinderkern einen Schlüsselkanal aufweisen, in den ein Schlüssel einsetzbar ist, wobei der Zylinderkern eine innenliegende Stirnfläche aufweist, die einer außenliegenden Stirnfläche, an der der Schlüssel einführbar ist, des Zylinderkerns abgewandt ist, wobei die innenliegende Stirnfläche in Wirkverbindung mit dem Schalter ist. Im Gegensatz zur DE 42 19 864 C2 befindet sich die Anlasswiederholsperre vorteilhafterweise im Bereich der innenliegenden Stirnfläche des Steuergliedes. Hierdurch können etwaige Manipulationsversuche an der Anlasswiederholsperre von Außen nahezu ausgeschlossen werden.

Die erfindungsgemäße Vorrichtung kann als elektrische Lenkungsverriegelung für Fahrzeuge zum Einsatz kommen, wobei die Vorrichtung zudem problemlos mit insbesondere sogenannten "Keyless-Entry-Systemen" kombinierbar ist. Die erfindungsgemäße Vorrichtung kann von außen beispielsweise per Funksignal oder nach einem stattgefundenen Datenaustausch aktiviert werden. Dabei ermöglicht die Erfindung selbstverständlich eine Rückmeldung dahingehend, ob die betreffende Vorrichtung zuverlässig das funktionswesentliche Bauteil, insbesondere die Lenksäule oder den Zylinderkern zur Anlasswiederholung blockiert oder nicht. Dies kann z. B. durch eine optische oder akustische Meldevorrichtung dargestellt werden.

Vorteilhafterweise wird die Vorrichtung zur Ansteuerung des Sperrgliedes durch eine Steuerelektronik überwacht, die fahrzeugseitig angeordnet sein kann. Aus sicherheitstechnischen Gründen ist es vorteilhaft, wenn neben der Positionsbestimmung des Sperrgliedes auch der Drehweg des Steuergliedes erfasst wird. Dieses kann beispielsweise durch Sensoren, insbesondere Magnetfeldsensoren, erfolgen, die das magnetische Feld eines auf dem Sperrglied oder Steuerglied angebrachten Permanentmagneten erfassen. Dadurch kann eine elektronische Steuerung die Funktionsfähigkeit der Gesamtvorrichtung sowie eine etwaige Manipulation erkennen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: die stirnseitige Draufsicht auf den Schließzylinder mit verschiedenen zueinander winkelversetzten Stellungen eines zugehörigen Zylinderkerns,
- Fig. 2: eine Seitenansicht auf die erfindungsgemäße Vorrichtung eines Lenkschlosses in strichpunktiert angedeuteter Montagelage zu einer Lenksäule und ihrem Gehäuse,
- Fig. 3: eine Querschnittsansicht gemäß der Schnittlinie III-III aus Fig. 2,
- Fig. 4: eine Draufsicht auf die innenliegende Stirnfläche des Zylinderkerns, wobei der Zylinderkern sich in einer Nullstellung befindet,
- Fig. 5: eine Ansicht gemäß Fig. 4, wobei der Zylinderkern sich in einer winkelversetzten Stellung I befindet,
- Fig. 6: eine Darstellung gemäß Fig. 4, wobei der Zylinderkern sich in der Stellung III befindet,
- Fig. 7: eine Darstellung gemäß Fig. 4, wobei sich der Zylinderkern in Richtung einer Zwischenstellung bewegt,
- Fig. 8: eine Darstellung gemäß Fig. 4, wobei der Zylinderkern sich in der Zwischenstellung II befindet,
- Fig. 9: eine Darstellung gemäß Fig. 4, wobei der Zylinderkern aus der Zwischenstellung in Richtung Nullstellung sich bewegt,
- Fig. 10: eine Darstellung gemäß Fig. 4, wobei der Zylinderkern sich in Richtung Nullstellung bewegt,
- Fig. 11: eine Darstellung gemäß Fig. 4, wobei der Zylinderkern seine Nullstellung erreicht hat und
- Fig. 12: eine weitere alternative Ausführungsform der erfindungsgemäßen Vorrichtung, bei der sich der Zylinderkern in seiner Nullstellung befindet und
- Fig. 13: eine Schnittdarstellung gemäß der Schnittlinie A-A aus Fig. 5.

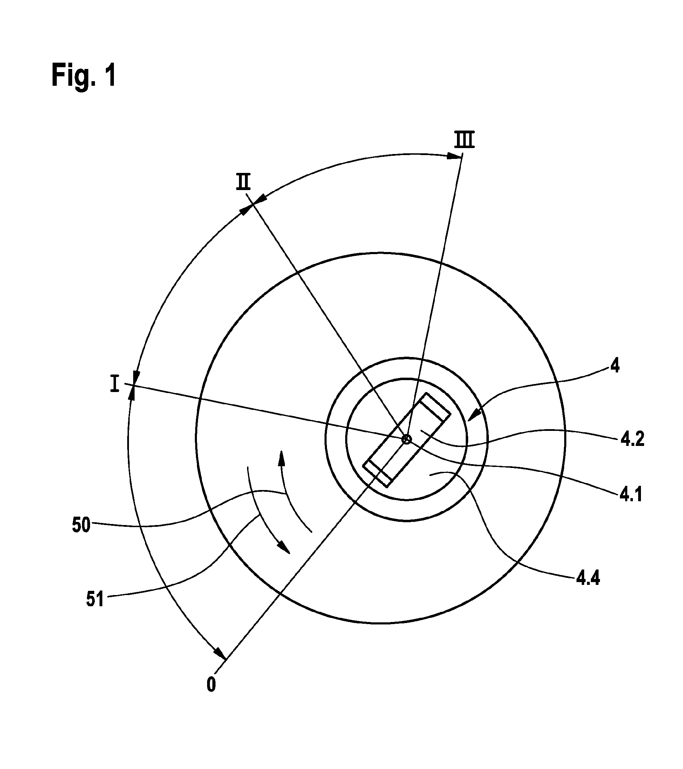

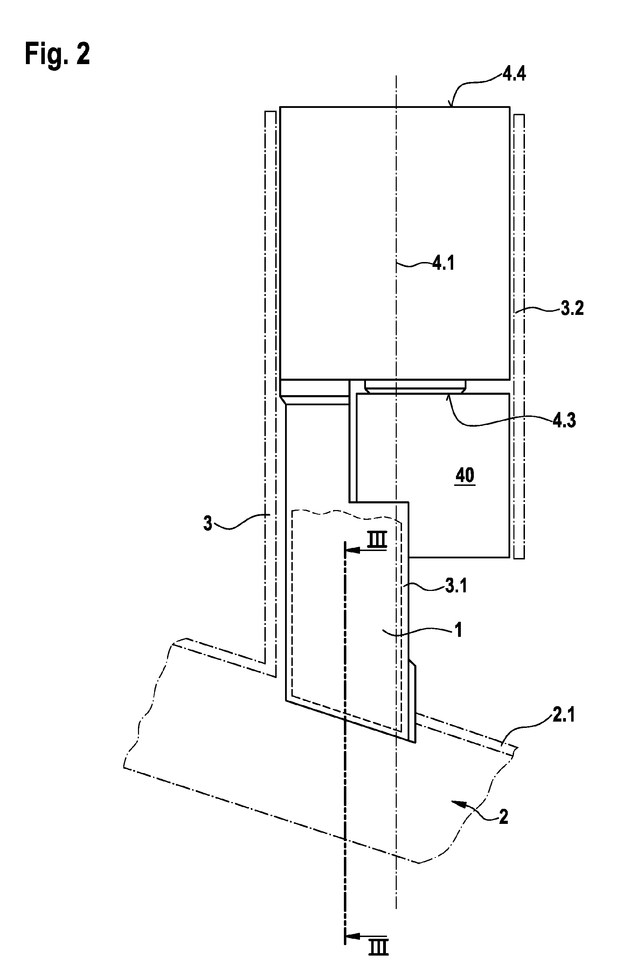

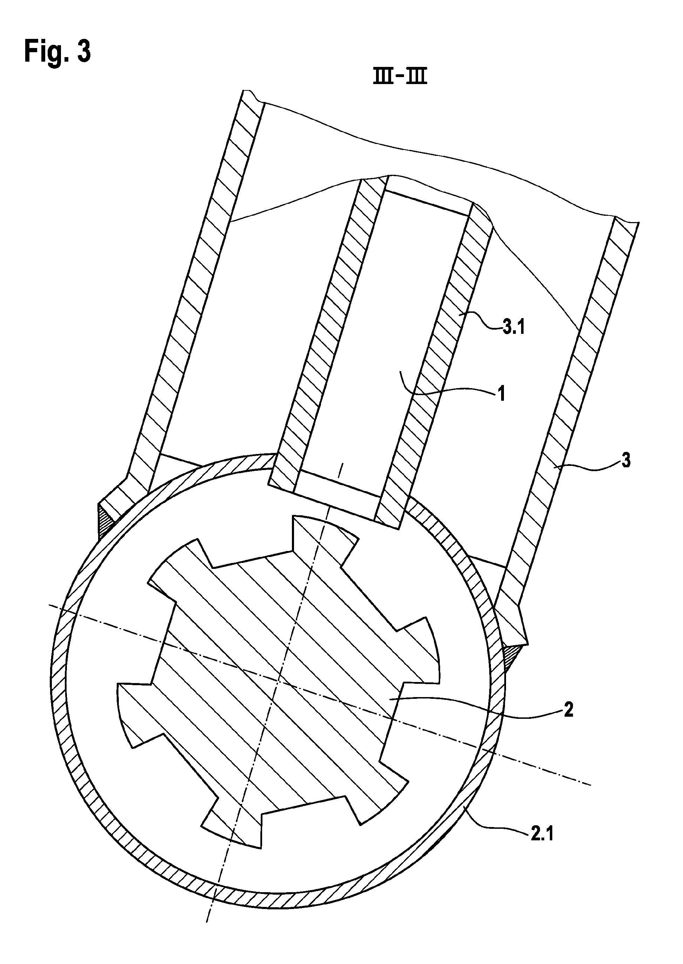

Die Figuren 1 bis 12 veranschaulichen zwei Ausführungsbeispiele einer erfindungsgemäßen Vorrichtung zur Ansteuerung eines Sperrgliedes 1 einer Lenksäule 2 eines Kraftfahrzeuges. Hierbei ist die erfindungsgemäße Vorrichtung ein Lenkschloss mit einem Schließzylinder, der ein Gehäuse 3 aufweist, welches in Fig. 2 und Fig. 3 angedeutet ist. Hierbei ist das Gehäuse 3 mehrteilig ausgeführt. In einem Gehäuseoberteil 3.2 befindet sich ein Zylinderkern 4, der drehbar um eine erste Achse 4.1 gelagert ist. Hierbei ist der Zylinderkern 4 gemäß Fig. 1 aus einer Nullstellung 0 in weitere zueinander winkelversetzte Stellungen I, II, III bewegbar. Der Zylinderkern 4 besitzt einen Schlüsselkanal 4.2 zur Aufnahme eines nicht expliziten dargestellten Schlüssels, mit welchem der Zylinderkern 4 aus der in Fig. 1 bezeichneten Nullstellung 0 in die drei bereits erwähnte Stellungen I, II und III überführbar ist. Deren Winkelversatz ist aus den in Fig. 1 erkennbaren Winkelbeträgen α, β und γ entnehmbar.

Bei der vorliegenden Anwendung auf ein Kraftfahrzeug sind in der Vorstellung I des Zylinderkerns 4 über einen Schalter 40, der in Fig. 2 schematisch dargestellt ist, diverse Verbraucher am Kraftfahrzeug, beispielsweise ein Radio mit einer entsprechenden Spannung aktivierbar. Beim Weiterdrehen im Einschaltsinn 50 in die Zwischenstellung II befindet sich das Fahrzeug in seiner Funktion "Fahrt", wo der Motor läuft, wenn vorausgehend in der äußersten Endstellung III über den Schalter 40 die "Zündung" des Motors bereits erfolgt ist. Falls der Benutzer eine Deaktivierung des Motors wünscht, wird aus der Zwischenstellung II der Zylinderkern 4 in Richtung Nullstellung 0 bewegt, wobei der Zylinderkern 4 sich im Ausschaltsinn 51 bewegt. In den Stellungen I, II und III ist ein Herausziehen des eingesteckten Schlüssels nicht möglich, da die erfindungsgemäße Vorrichtung mit einer Schlüsselabzugssicherung versehen ist, die jedoch explizit nicht dargestellt ist.

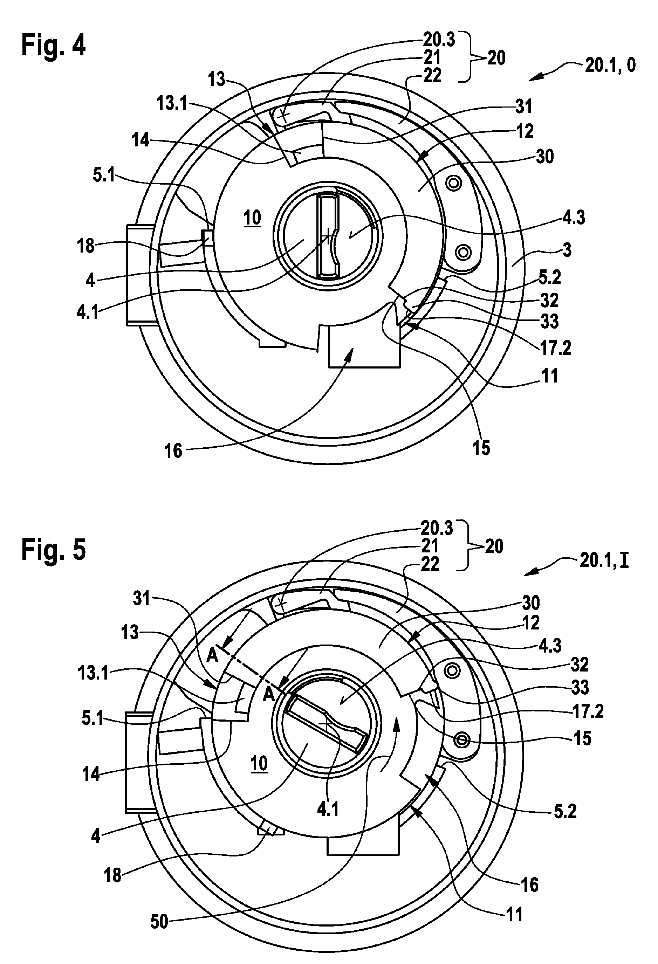

Wie in Fig. 4 dargestellt ist, ist ein Steuerglied 10 vorgesehen, das mit dem Sperrglied 1 aus der Fig. 2 und Fig. 3 mechanisch gekoppelt ist. Über eine entsprechende Drehung des Zylinderkerns 4 erfolgt eine Bewegung des Steuergliedes 10, wobei das Steuerglied 10 derart mit dem Sperrglied 1 in Wirkverbindung steht, dass das Sperrglied 1 zwischen einer Verriegelungsstellung und einer Entriegelungsstellung bringbar ist. In Fig. 3 ist exemplarisch eine Entriegelungsstellung gezeigt, in der das Sperrglied 1 losgelöst und beabstandet von der Lenksäule 2 ist. In diesem Fall ist eine entsprechende Bewegung der Lenksäule 2 möglich. In der nicht explizit dargestellten Verriegelungsstellung greift hingegen das Sperrglied 1 derart in die Profilierung der Lenksäule 2 ein, dass eine Bewegung der Lenksäule 2 blockiert ist. Wie in Fig. 3 gezeigt ist, ist die Lenksäule 2 durch ein zylinderförmiges Lenksäulengehäuse 2.1 von außen abgeschlossen. Das Sperrglied 1 ist ebenfalls in einem separaten Gehäuseunterteil 3.1 linear beweglich geführt, welches in Fig. 2 und Fig. 3 gezeigt ist.

Das in den Ausführungsbeispielen gezeigte Lenkschloss weist eine Anlasswiederholsperre 20 mit einem Blockierelement 21 auf, das gemäß Fig. 4 um eine zur ersten Achse 4.1 beabstandeten zweiten Achse 20.3 schwenkbar gelagert ist. Bei der vorliegenden erfindungsgemäßen Vorrichtung kommt es darauf an, eine Drehung im Einschaltsinn 50 aus der Zwischenstellung II erneut in die Endstellung III dann zu verhindern, wenn vorausgehend der Zylinderkern 4 bereits zum Zwecke des Anlassens der Maschine des Kraftfahrzeuges in die Endstellung III gebracht worden ist und der Zylinderkern 4 aufgrund einer Wirkung einer Federkraft, die für eine selbstständige Rückstellung des Zylinderkerns 4 aus der Endstellung III im Ausschaltsinn 51 in die Zwischenstellung II sorgt, bereits in die Zwischenstellung II zurückgeführt worden ist. Eine derartige Zielsetzung wird als "Anlasswiederholsperre" bezeichnet. Dadurch sollen unter anderem Beschädigungen am Anlasser und der damit zusammenwirkenden Bauteile des Kraftfahrzeuges wirksam verhindert werden.

Die beiden Ausführungsbeispiele zeichnen sich dadurch aus, dass die Anlasswiederholsperre 20 axial zur ersten Achse 4.1 innerhalb des Lenkschlosses angeordnet ist, wodurch eine kompakte und platzsparende Gesamtvorrichtung erzielt wird und gleichzeitig eine zuverlässige Funktionsweise sichergestellt wird.

Gemäß Fig. 4 befindet sich der Zylinderkern 4 in seiner Nullstellung 0. Das Blockierelement 21 der Anlasswiederholsperre 20 befindet sich hierbei in seiner Ruhelage 20.1. Wie deutlich zu erkennen ist, weist das Steuerglied 10, das ebenfalls um die erste Drehachse 4.1 gelagert ist, eine Kontur 11 auf, die während der Bewegung des Zylinderkerns 4 in seine jeweiligen Stellungen I, II und III auf das Blockierelement 21 wirkt, so dass das Blockierelement 21 sich aus der Ruhelage 20.1 in eine Sperrlage 20.2 bewegt, worauf noch im folgenden eingegangen wird.

In beiden dargestellten Ausführungsbeispielen dieser Erfindung sind der Zylinderkern 4 sowie das Steuerglied 10 zwei unterschiedliche Bauteile, wobei der Zylinderkern 4 und das Steuerglied 10 drehfest miteinander verbunden sind. Selbstverständlich ist es hierbei denkbar, den Zylinderkern 4 und das Steuerglied 10 als gemeinsames Bauteil auszubilden, welches jedoch explizit nicht dargestellt ist.

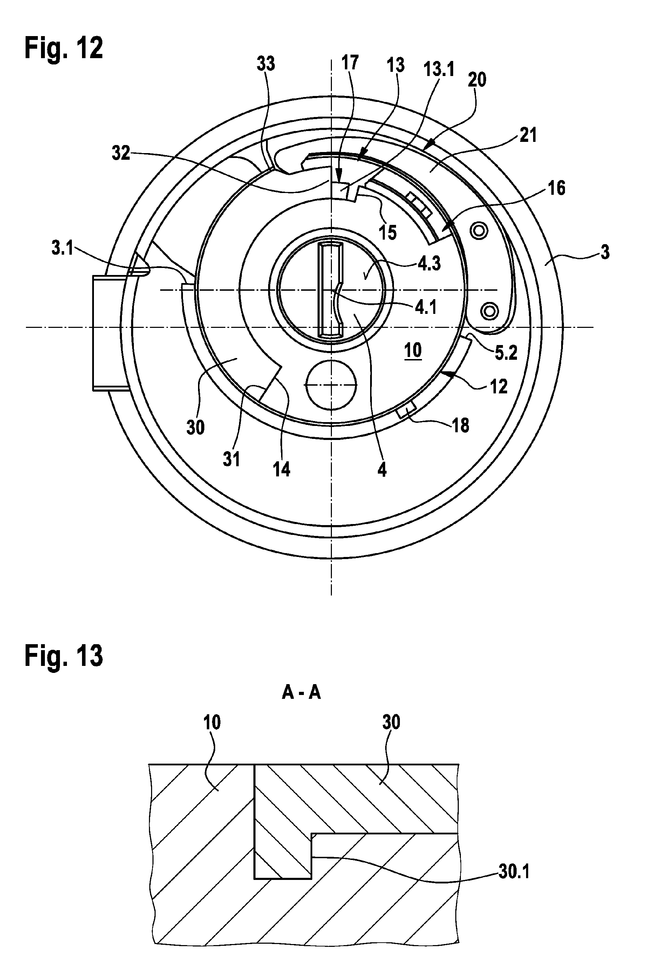

Im ersten Ausführungsbeispiel gemäß Fig. 4 bis Fig. 11 ist die Anlasswiederholsperre 20 mehrteilig ausgeführt. Hierbei umfasst die Anlasswiederholsperre 20 zum einen das Blockierelement 21. Zum anderen wirkt ein bogenförmiges Federelement 22 mit einem freien Ende auf das Blockierelement 21. Das zweite Ausführungsbeispiel gemäß Fig. 12 zeigt hingegen eine einteilig ausgeführte Anlasswiederholsperre 20, bei der das Blockierelement 21 gleichzeitig das Federelement ist, das bogenförmig um das Steuerglied 10 sich erstreckt. Die Wirkungsweise und Kinematik der Anlasswiederholsperre 20, die explizit in den Figuren 4 bis 11 ausführlich gezeigt ist, lässt sich 100%-ig auf die einteilige Ausführungsform der Anlasswiederholsperre 20 gemäß Fig. 12 beziehen. Der einzige Unterschied zwischen beiden Ausführungsformen ist, dass im ersten Ausführungsbeispiel gemäß Fig. 4 bis 11 ein zusätzliches Bauteil eines bogenförmigen ausgebildeten Federelementes 22 vorgesehen ist, welches mit einer definierten Kraft auf das Blockierelement 21 während der Bewegung des Zylinderkerns 4 im Einschaltsinn 50 sowie im Ausschaltsinn 51 ausübt.

Wie in Fig. 4 zu erkennen ist, ist ein Schaltring 30 am Steuerglied 10 beweglich angeordnet. Hierbei ist das Steuerglied 10 an seinem Randbereich 12 mit einer Ausnehmung 13 ausgeführt. In dieser Ausnehmung 13 ist der Schaltring 30 beweglich gelagert. Wie gut aus Fig. 4 zu erkennen ist, füllt der Schaltring 30 nur teilweise die Ausnehmung 13 aus. Gemäß Fig. 5 und Fig. 13 weist die Ausnehmung 13 eine Nut 13.1 auf, in die der Schaltring 30 mit einem Fußbereich 30.1 hineinragt. Des Weiteren ist der Schaltring 30 mit einem radial nach außen sich erstreckenden Vorsprung 33 ausgeführt. Der Zylinderkern 4 ist gemäß des aufgeführten Ausführungsbeispieles mit einer nicht explizit dargestellten Druckfeder federbelastet, so dass während der Bewegung des Zylinderkerns 4 zwischen der Nullstellung 0 und den jeweiligen Stellungen I, II, III ein Moment auf den Zylinderkern 4 angreift, das in Richtung der Nullstellung 0 wirkt.

Die Ausnehmung 13 des Steuergliedes 10 weist einen ersten 14 und einen zweiten Anschlag 15 auf. Der Schaltring 30 weist ein erstes Ende 31 sowie ein zweites Ende 32 auf, wobei das erste Ende 31 des Schaltringes 30 dem ersten Anschlag 14 zugewandt ist. Gemäß Fig. 4 besteht ein Abstand zwischen dem ersten Ende 31 des Schaltringes 30 und dem ersten Anschlag 14 der Ausnehmung 13. Das zweite Ende 32 des Schaltringes 30 kontaktiert den zweiten Anschlag 15 der Ausnehmung 13.

Das Steuerglied 10 weist einen radial nach außen verlaufenden Nocken 18 auf, der einstückig mit dem Steuerglied 10 verbunden ist. Der Nocken 18 kontaktiert in der in Fig. 4 dargestellten Position einen ersten Anschlag 5.1 des Gehäuses 3. Des Weiteren ist das Steuerglied 10 mit einem einseitig offenen Freiraum 16 ausgebildet.

Bei eingestecktem Schlüssel lässt sich nun der Zylinderkern 4 im Einschaltsinn 50 aus der Nullstellung 0 gemäß Fig. 4 in seine in Fig. 5 gezeigte Vorstellung I überführen, deren Drehwinkel α bereits im Zusammenhang mit Fig. 1 beschrieben worden ist. Während der Zylinderkern 4 im Einschaltsinn 50 gedreht wird, bewegt sich gleichzeitig das Steuerglied 10 mit sowie der koaxial zum Zylinderkern 4 vorgesehenen Schaltring 30. Das Federelement 22 übt eine definierte Kraft auf das freie Ende des Blockierelementes 21 in Richtung erste Achse 4.1 aus. Während der Bewegung des Zylinderkerns 4 in die Vorstellung I kontaktiert gleichzeitig das freie Ende des Blockierelementes 21 den Schaltring 30 an seinem Randbereich.

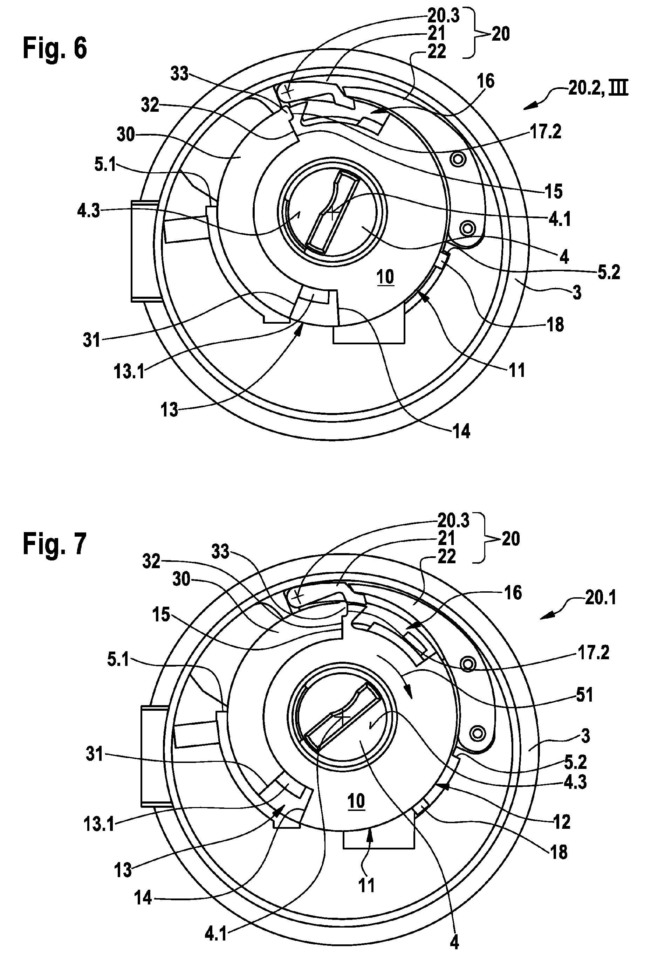

Erfolgt im Einschaltsinn 50 eine weitere Drehung des Zylinderkerns 4 um seine Achse 4.1 in Richtung Endstellung III, überfährt das freie Ende des Blockierelementes 21 den Vorsprung 33 des Schaltringes 30, wobei das Blockierelement 21 um seine Achse 20.3 gegen den Uhrzeigersinn um geringe Winkelbeträge verschwenkt wird. Gleichzeitig wird das Federelement 22 nach oben gedrückt. Nachdem das freie Ende des Blockierelementes 21 über den Vorsprung 33 gelangt ist, kontaktiert das freie Ende des Blockierelementes 21 wieder die Kontur 11 des Steuergliedes 10, wobei in der Fig. 6 dargestellten Endstellung III des Zylinderkerns 4 das Blockierelement 21 in einen einseitig offenen Freiraum 16 des Steuergliedes 10 hineinragt. Das Federelement 22 drückt ebenfalls mit einer entsprechenden Kraft auf das Blockierelement 21, wodurch das Blockierelement 21 gemäß Fig. 6 in seiner gezeigten Position zuverlässig gehalten ist. In dieser Endstellung III erfolgt die Zündung des Motors. Der außenliegende Nocken 18 des Steuergliedes 10 befindet sich hierbei an einem Anschlag 5.2 des Gehäuses 3, so dass wirkungsvoll ein Weiterdrehen im Einschaltsinn 50 des Zylinderkerns 4 verhindert wird.

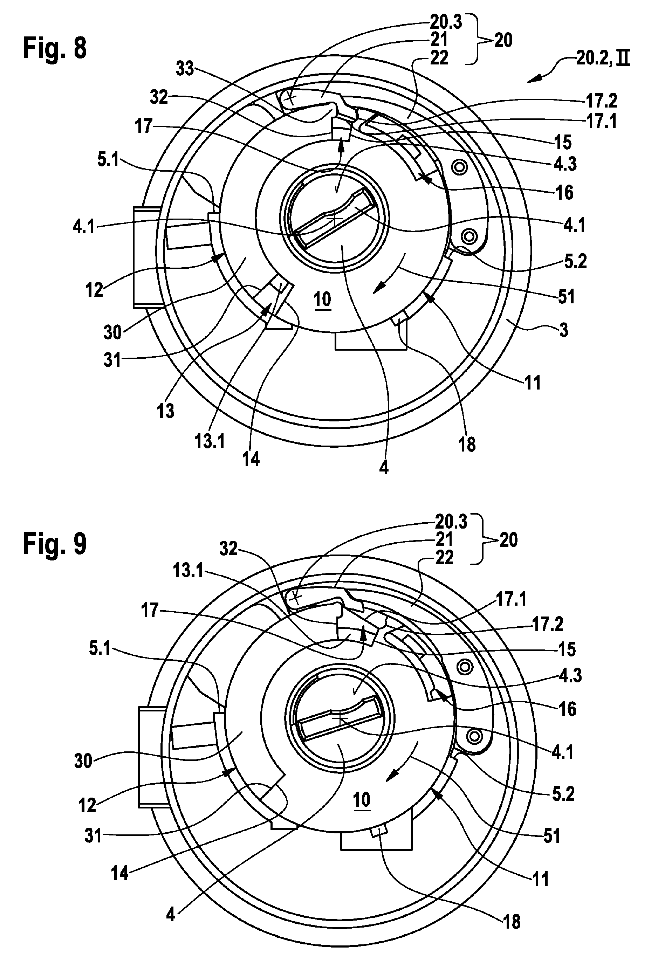

Während der Bewegung des Zylinderkerns 4 aus seiner Nullstellung 0 aus Fig. 4 in die Endstellung III in Fig. 6. liegt das zweite Ende 32 des Schaltringes 30 stets am zweiten Anschlag 15 des Steuergliedes 10 an, wobei gleichzeitig das erste Ende 31 des Schaltringes 30 beabstandet zum ersten Anschlag 14 des Steuergliedes 10 bleibt. Der Zylinderkern 4 wird nach Loslassen des Schlüssels bereits von selbst, aufgrund der auf ihn wirkenden eingangs beschriebenen Federkraft im Ausschaltsinn 51 von Fig. 6 zurückbewegt. Das Steuerglied 10 ist mit einem Steuerelement 10.1 ausgeführt, welches das Blockierelement 21 aus dem Freiraum 16 wegdrückt, wodurch das Blockierelement 21 aus seiner Sperrlage 20.2 aus Fig. 6 in seine ursprüngliche Ruhelage 20.1 gemäß Fig. 7 bewegt wird. In Fig. 7 befindet sich bereits das Blockierelement 21 in seiner Ruhelage 20.1, wobei das freie Ende des Blockierelementes 21 das Steuerelement 10.1 am Randbereich kontaktiert. Hat der Zylinderkern 4 seine Drehstellung gemäß Fig. 7 erreicht, kontaktiert das freie Ende des Blockierelementes 21 den Vorsprung 33 des Schaltringes 30. Während sich das Steuerglied 10 mit dem Zylinderkern 4 weiter in Richtung Zwischenstellung II in Ausschaltsinn 51 bewegt, schlägt der Vorsprung 33 gegen das Blockierelement 21 an, wodurch der Schaltring 30 in der Position gemäß Fig. 7 verbleibt. Dadurch, dass sich das Steuerglied 10 weiter im Ausschaltsinn 51 bewegt, nähert sich der erste Anschlag 14 des Steuergliedes 10 dem ersten Ende 31 des Schaltringes 30 an. Gleichzeitig entfernt sich der zweite Anschlag 15 des Steuergliedes 10 dem zweiten Ende 32 des Schaltringes 30. Wie in Fig. 8 verdeutlicht ist, verfährt das Blockierelement 21 in die entstehende Lücke, die zwischen dem zweiten Anschlag 15 und dem zweiten Ende 32 des Schaltringes 30 entsteht. Im Bereich dieser genannten Lücke ist das Steuerglied 10 an seinem Randbereich 12 mit einer entsprechenden Einbuchtung 17 ausgeführt, in der das Blockierelement 21 - wie bereits beschrieben - in der Zwischenstellung II gemäß Fig. 8 aufgenommen ist. Hierbei weist die Einbuchtung 17 eine Steuerkurve 17.1 auf, die als Steuerflanke ausgeführt ist.

Ausgehend von der in Fig. 8 dargestellten Zwischenstellung II ist eine erneute Drehung des Zylinderkerns 4 im Einschaltsinn 50 ausgeschlossen. Die Einbuchtung 17 ist mit einer Blockierfläche 17.2 ausgeführt, an der das Blockierelement 21 mit seinem freien Ende in der Zwischenstellung II des Zylinderkerns 4 derart anliegt, dass eine erneute Bewegung des Zylinderkerns 4 im Einschaltsinn 50 blockiert ist.

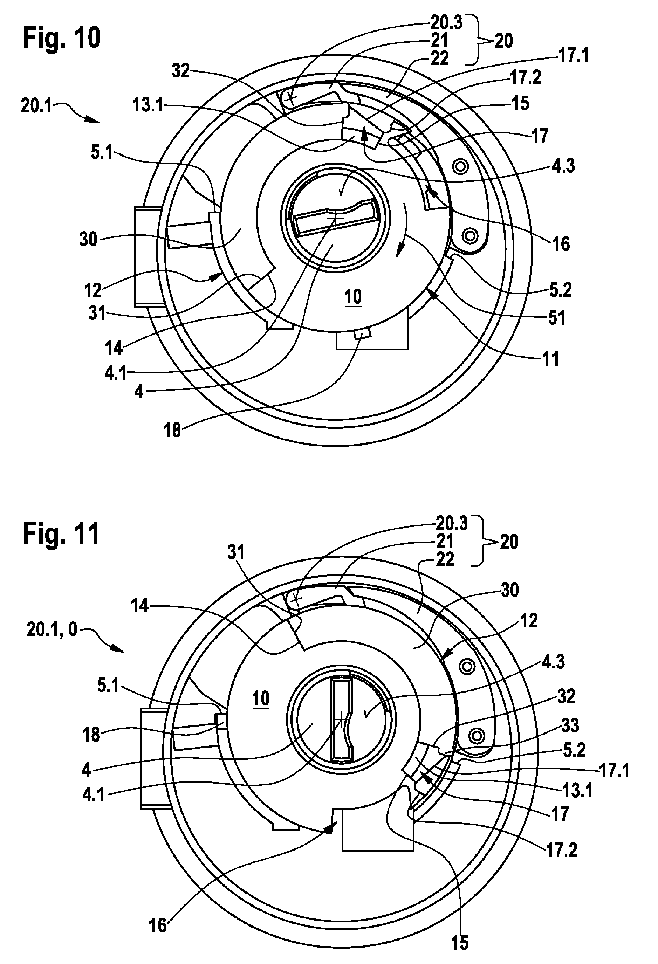

Erfolgt durch den Benutzer eine Drehung des Zylinderkerns 4 ausgehend von Fig. 8 im Ausschaltsinn 51, greift die Steuerkurve 17.1 derart am Blockierelement 21 an, dass dieses während der Bewegung des Zylinderkerns 4 in Richtung Nullstellung 0 aus seiner Sperrlage 20.2 in die Ruhelage 20.1 um seine Achse 20.3 sich verschwenkt. Während sich das Steuerglied 10 weiter im Ausschaltsinn 50 bewegt, hält das freie Ende des Blockierelementes 21 den Schaltring 30 an seinem Vorsprung 33 fest, wodurch sich der Abstand zwischen dem zweiten Ende 32 des Schaltringes 30 und dem zweiten Anschlag 15 des Steuergliedes 10 vergrößert. In Fig. 9 kommt es schließlich zu einem Anschlag zwischen dem ersten Ende 31 des Schaltringes 30 und dem ersten Anschlag 14 des Steuergliedes 10. Ab diesem Drehwinkel des Zylinderkerns 4 nimmt das Steuerglied 10 den Schaltring 30 im Ausschaltsinn 51 mit, wobei gleichzeitig der Vorsprung 33 das Blockierelement 21 in seine Ruhelage 20.1 drückt, die in Fig. 10 dargestellt ist. Die Steuerkurve 17.1 ist im vorliegenden Ausführungsbeispiel schräg ausgeführt, um zuverlässig eine entsprechende Führung des Blockierelementes 21 in seine jeweilige Lage 20.1, 20.2 zu gewährleisten. In Fig. 11 ist schließlich die Nullstellung 0 des Zylinderkerns 4 erreicht, wobei das Blockierelement 21 mit seinem freien Ende den Schaltring 30 kontaktiert, wobei gleichzeitig das Federelement 22 entsprechend eine Kraft auf das freie Ende des Blockierelementes 21 ausübt.

Im Ausführungsbeispiel gemäß Fig. 12 weist die Anlasswiederholsperre 20 ein Blockierelement 21 auf, welches gleichzeitig das Federelement ist. Das freie Ende 21 des Blockierelementes 21 entspricht im Wesentlichen dem Blockierelement 21 gemäß des ersten Ausführungsbeispiels. Der einzige Unterschied zwischen beiden Ausführungsbeispielen ist, dass das Blockierelement 21 gemäß des ersten Ausführungsbeispiels um eine Achse 20.1 drehbar gelagert ist. Gemäß des zweiten Ausführungsbeispieles aus Fig. 12 ist das Blockierelement 21 gleichzeitig ein bogenförmiges Federelement, welches mit seinem freien Ende am Steuerglied 10 sowie am Schaltring 30 entsprechend wirkt. Die in Fig. 4 bis Fig. 11 beschriebene Kinematik lässt sich ohne Unterschiede auf das Ausführungsbeispiel gemäß Fig. 12 beziehen. Analog zum ersten Ausführungsbeispiel verfährt das freie Ende des Blockierelementes 21 die gleichen Positionen ab, die bereits in Fig. 4 bis Fig. 11 beschrieben sind.

Gemäß beider Ausführungsbeispiele befindet sich die Anlasswiederholsperre 20 im Bereich der innenliegenden Stirnfläche 4.3 des Steuergliedes 10, wodurch wirkungsvoll etwaige Manipulationen am Außenbereich des Zylinderkerns eine Funktionsstörung der Anlasswiederholsperre 20 nahezu ausschließen.

Bedeutsam ist, dass die Anlasswiederholsperre 20 aufgrund ihrer axialen Anordnung um den Zylinderkern 4 sowie um das Steuerglied 30 eine sehr kompakte Konstruktion der erfindungsgemäßen Vorrichtung erzielen lässt. Gleichzeitig sind nur sehr geringe Hubwege beim Blockierelement 21 notwendig, um wirkungsvoll die bereits geschilderten Stellungen 0, I, II und III des Zylinderkerns 4 ermöglichen zu können.

### Bezugszeichenliste

- 0: Nullstellung
- I: Vorstellung
- II: Zwischenstellung
- III: Endstellung
- 1: Sperrglied
- 2: Lenksäule
- 3: Gehäuse
- 3.1: Gehäuseunterteil
- 3.2: Gehäuseoberteil
- 4: Zylinderkern
- 4.1: erste Achse
- 4.2: Schlüsselkanal
- 4.3: innenliegende Stirnfläche
- 4.4: außenliegende Stirnfläche
- 5.1: Anschlag
- 5.2: Anschlag

- 10: Steuerglied
- 10.1: Steuerelement
- 11: Kontur
- 12: Randbereich des Steuergliedes
- 13: Ausnehmung
- 13.1: Nut
- 14: erster Anschlag
- 15: zweiter Anschlag
- 16: Freiraum
- 17: Einbuchtung
- 17.1: Steuerkurve
- 17.2: Blockierfläche
- 18: Nocken
- 20: Anlasswiederholsperre
- 20.1: Ruhelage
- 20.2: Sperrlage
- 20.3: zweite Achse
- 21: Blockierelement
- 22: Federelement

- 30: Schaltring
- 30.1: Fußbereich
- 31: erstes Ende des Schaltringes
- 32: zweites Ende des Schaltringes
- 33: Vorsprung

- 40: Schalter

- 50: Einschaltsinn
- 51: Ausschaltsinn

## Patentansprüche

1. Vorrichtung zur Ansteuerung eines Sperrgliedes (1) einer Lenksäule (2) eines Kraftfahrzeuges, mit
einem Schließzylinder, der ein Gehäuse (3) und ein darin aufgenommenen, um eine Achse (4.1) drehbaren Zylinderkern (4) aufweist, der aus einer Nullstellung (0) in weitere, zueinander winkelversetzte Stellungen (I,II,III), wie eine Zwischenstellung (II) und eine Endstellung (III) drehbar ist,
einem Steuerglied (10), das mit dem Sperrglied (1) mechanisch gekoppelt ist, so dass bei Drehung des Zylinderkerns (4) um die erste Achse (4.1) das Sperrglied (1) zwischen einer Verriegelungsstellung und einer Entriegelungsstellung bringbar ist,
einem Schalter (40), der entsprechend der Stellung des Zylinderkerns (4) unterschiedliche Betriebszustände des Kraftfahrzeuges bestimmt, wobei in der Zwischenstellung (II) der Fahrzeugmotor aktiv ist, nachdem vorausgehend in der Endstellung (III) eine Zündung des Fahrzeugmotors erfolgt ist, und
einer Anlasswiederholsperre (20), die bei aktiviertem Fahrzeugmotor auf den Zylinderkern (4) wirkt, wodurch eine erneute Drehung des Zylinderkerns (4) in die Endstellung (III) verhindert wird,
**dadurch gekennzeichnet,**
**dass** die Anlasswiederholsperre (20) ausschließlich ein Blockierelement (21) umfasst, wobei die Anlasswiederholsperre (20) koaxial zum Zylinderkern (4) sowie zum Steuerglied (10) angeordnet ist und bogenförmig um das Steuerglied (10) verläuft.

2. Vorrichtung nach Anspruch 1,
**dadurch gekennzeichnet,**
**dass** das Blockierelement (21) um eine zur ersten Achse (4.1) beabstandeten zweite Achse (20.3) schwenkbar gelagert ist.

3. Vorrichtung nach einem der vorhergehenden Ansprüche,
**dadurch gekennzeichnet,**
**dass** in der Nullstellung (0) des Zylinderkerns (4) das Blockierelement (21) sich in einer Ruhelage (20.1) befindet,
in der Zwischenstellung (II) und/oder Endstellung (III) des Zylinderkerns (4) das Blockierelement (21) sich in einer Sperrlage (20.2) befindet, wobei das Steuerglied (10) mit einer Kontur (11) ausgeführt ist, die während der Bewegung des Zylinderkerns (4) in seine jeweilige Stellung (0,I,II,III) auf das Blockierelement (21) wirkt, so dass das Blockierelement (21) sich in eine Richtung aus der Ruhelage (20.1) in die Sperrlage (20.2) bewegt, die im wesentlichen zur ersten Achse (4.1) des Zylinderkerns (4) gerichtet ist.

4. Vorrichtung nach einem der vorhergehenden Ansprüche,
**dadurch gekennzeichnet,**
**dass** der Zylinderkern (4) und das Steuerglied (10) ein gemeinsames Bauteil bilden oder der Zylinderkern (4) mit dem Steuerglied (10) drehfest verbunden ist.

5. Vorrichtung nach einem der vorhergehenden Ansprüche,
**dadurch gekennzeichnet,**
**dass** die Anlasswiederholsperre (20) mehrteilig ausgeführt ist, wobei ein bogenförmiges Federelement (22) auf das Blockierelement (21) wirkt.

6. Vorrichtung nach Anspruch 1 bis 4,
**dadurch gekennzeichnet,**
**dass** das Blockierelement (21) als Federelement ausgeführt ist, das bogenförmig um das Steuerglied (10) verläuft.

7. Vorrichtung nach einem der vorhergehenden Ansprüche,
**dadurch gekennzeichnet,**
**dass** ein Schaltring (30) am Steuerglied (10) beweglich angeordnet ist, insbesondere das das Steuerglied (10) an seinem Randbereich (12), der dem Blockierelement (21) zugewandt ist, mit einer Ausnehmung (13) ausgeführt ist, in der der Schaltring (30) beweglich gelagert ist, wobei insbesondere die Ausnehmung (13) eine Nut (13.1) aufweist, in die der Schaltring (30) mit einem Fußbereich (30.1) hineinragt und/oder wobei insbesondere der Schaltring (30) einen radial, nach außen sich erstreckenden Vorsprung (33) aufweist.

8. Vorrichtung nach einem der vorhergehenden Ansprüche,
**dadurch gekennzeichnet,**
**dass** der Zylinderkern (4) derart federbelastet ist, dass während der Bewegung des Zylinderkerns (4) zwischen der Nullstellung (0) und den jeweiligen Stellungen (I,II,III) ein Moment am Zylinderkern (4) angreift, das in Richtung der Nullstellung (0) wirkt.

9. Vorrichtung nach einem der vorhergehenden Ansprüche,
**dadurch gekennzeichnet,**
**dass** die Ausnehmung (13) des Steuergliedes (10) einen ersten (14) und einen zweiten Anschlag (15) aufweist, wobei der Schaltring (30) ein erstes Ende (31) und ein zweites Ende (32) aufweist, wobei das erste Ende (31) des Schaltringes (30) dem ersten Anschlag (14) und das zweite Ende (32) des Schaltringes (30) dem zweiten Anschlag (15) zugewandt ist, wobei die Ausnehmung (13) nur teilweise durch den Schaltring (30) ausgefüllt ist.

10. Vorrichtung nach einem der vorhergehenden Ansprüche,
**dadurch gekennzeichnet,**
**dass** das Steuerglied (10) einen radial nach außen verlaufenden Nocken (18) aufweist, der in Nullstellung (0) und in Endstellung (III) an einem Anschlag (5.1,5.2) des Gehäuses (3) anliegt
**und/oder**
**dass** das Steuerglied (10) mit einem einseitig offenen Freiraum (16) ausgebildet ist, in den das Blockierelement (21) in der Endstellung (III) des Zylinderkerns (4) hineinragt.

11. Vorrichtung nach einem der vorhergehenden Ansprüche,
**dadurch gekennzeichnet,**
**dass** das Steuerglied (10) an seinem Randbereich (12) eine Einbuchtung (17) aufweist, in die sich das Blockierelement (21) in der Zwischenstellung (II) des Zylinderkerns (4) erstreckt, insbesondere die Einbuchtung (17) eine Steuerkurve (17.1) aufweist, die am Blockierelement (21) während der Bewegung des Zylinderkerns (4) von seiner Zwischenstellung (II) in die Nullstellung (0) derart angreift, dass das Blockierelement (21) aus seiner Sperrlage (20.2) in die Ruhelage (20.1) sich verschwenkt.

12. Vorrichtung nach einem der vorhergehenden Ansprüche,
**dadurch gekennzeichnet,**
**dass** bei einer Bewegung des Zylinderkerns (4) aus seiner Nullstellung (0) in Richtung Endstellung (III) der Schaltring (30) mit seinem zweiten Ende (32) am zweiten Anschlag (15) anliegt und gleichzeitig die Einbuchtung (17) verdeckt ist, wobei das erste Ende (31) des Schaltringes (30) zum ersten Anschlag (14) beabstandet ist **und/oder**
**dass** bei der Bewegung des Zylinderkerns (4) aus der Endstellung (III) in die Zwischenstellung (II) der Vorsprung (33) des Schaltringes (30) als Anschlagelement für das Blockierelement (21) dient, um den Schaltring (30) in Richtung des ersten Anschlages (14) des Steuergliedes (10) zu bewegen, wodurch gleichzeitig der Schaltring (30) mit seinem zweiten Ende (32) die Einbuchtung (17) verlässt und das Blockierelement (21) in die Einbuchtung (17) eintauchen.

13. Vorrichtung nach einem der vorhergehenden Ansprüche,
**dadurch gekennzeichnet,**
**dass** die Einbuchtung (17) mit einer Blockierfläche (17.2) ausgeführt ist, an der das Blockierelement (21) in der Zwischenstellung (II) des Zylinderkerns (4) derart anliegt, dass eine erneute Bewegung des Zylinderkerns (4) in Richtung Endstellung (III) blockiert ist.

14. Vorrichtung nach einem der vorhergehenden Ansprüche,
**dadurch gekennzeichnet,**
**dass** der Zylinderkern (4) einen Schlüsselkanal (4.2) aufweist, in den ein Schlüssel einsetzbar ist, wobei der Zylinderkern (4) eine innenliegende Stirnfläche (4.3) aufweist, die einer außenliegenden Stirnfläche (4.4), an der der Schlüssel einführbar ist, des Zylinderkerns (4) abgewandt ist, wobei die innenliegende Stirnfläche (4.3) in Wirkverbindung mit dem Schalter (40) ist
**und/oder**
**dass** die Anlasswiederholsperre (20) im Bereich der innenliegenden Stirnfläche (4.3) des Steuergliedes (10) wirkt.

## Claims

1. A device for operating a blocking member (1) of a steering column (2) of a motor vehicle, having
a closing cylinder, which has a housing (3) and a cylinder core (4), which is accommodated therein, can rotate about an axis (4.1) and can rotate from a neutral position (0) in further positions (I, II, III) at an angular offset from each other, such as an intermediate position (II) and an end position (III),
a control member (10), which is mechanically coupled to the blocking member (1), so that when the cylinder core (4) is rotated about the first axis (4.1) the blocking member (1) can be moved between a locking position and an unlocking position,
a switch (40), which defines different operating states of the motor vehicle corresponding to the position of the cylinder core (4), the vehicle engine being active in the intermediate position (II), after ignition of the vehicle engine has taken place previously in the end position (III), and
a restart block (20), which acts on the cylinder core (4) when the vehicle engine is activated, as a result of which the cylinder core (4) is prevented from rotating again into the end position (III),
**characterised in that**
the restart block (20) comprises only one blocking element (21), the restart block (20) being arranged coaxially to the cylinder core (4) and to the control member (10) and running in an arc-shaped manner around the control member (10).

2. The device according to Claim 1,
**characterised in that**
the blocking element (21) is mounted such that it can pivot about a second axis (20.3), which is spaced apart from the first axis (4.1).

3. The device according to any one of the preceding claims,
**characterised in that**
when the cylinder core (4) is in the neutral position (0), the blocking element (21) is in a rest position (20.1),
when the cylinder core (4) is in the intermediate position (II) and/or end position (III), the blocking element (21) is in a blocking position (20.2), wherein
the control member (10) is configured with a contour (11), which acts on the blocking element (21) while the cylinder core (4) moves into its respective position (0, I, I III), so that the blocking element (21) moves out of the rest position (20.1) into the blocking position (20.2) in a direction substantially towards the first axis (4.1) of the cylinder core (4).

4. The device according to any one of the preceding claims,
**characterised in that**
the cylinder core (4) and the control member (10) form a common component or the cylinder core (4) is connected in a rotationally fixed manner to the control member (10).

5. The device according to any one of the preceding claims,
**characterised in that**
the restart block (20) is in multi-part form, wherein an arc-shaped spring element (22) acts on the blocking element (21).

6. The device according to Claims 1 to 4,
**characterised in that**
the blocking element (21) is in the form of a spring element, which runs in an arc-shaped manner around the control member (10).

7. The device according to any one of the preceding claims,
**characterised in that**
a switching ring (30) is arranged movably on the control member (10), in particular that the control member (10) is configured with a cut-out (13) on its edge region (12) that faces the blocking element (21), in which cut-out the switching ring (30) is movably mounted, wherein in particular the cut-out (13) has a groove (13.1), into which a foot region (30.1) of the switching ring (30) projects and/or wherein in particular the switching ring (30) has a radially outwardly extending projection (33).

8. The device according to any one of the preceding claims,
**characterised in that**
the cylinder core (4) is spring-loaded in such a manner that, while the cylinder core (4) moves between the neutral position (0) and the respective positions (I, II, III), a torque effective in the direction of the neutral position (0) acts on the cylinder core (4).

9. The device according to any one of the preceding claims,
**characterised in that**
the cut-out (13) in the control member (10) has a first stop (14) and a second stop (15), wherein the switching ring (30) has a first end (31) and a second end (32), wherein the first end (31) of the switching ring (30) faces the first stop (14) and the second end (32) of the switching ring (30) faces the second stop (15), wherein the cut-out (13) is filled only partially by the switching ring (30).

10. The device according to any one of the preceding claims,
**characterised in that**
the control member (10) has a radially outwardly extending cam (18), which bears against a stop (5.1, 5.2) of the housing (3) in the neutral position (0) and in the end position (III) and/or that the control member (10) is formed with a free space (16) that is open on one side, into which the blocking element (21) projects when the cylinder core (4) is in the end position (III).

11. The device according to any one of the preceding claims,
**characterised in that**
the control member (10) has a recess (17) on its edge region (12), into which recess the blocking element (21) extends when the cylinder core (4) is in the intermediate position (II), in particular the recess (17) has a control curve (17.1),
which acts on the blocking element (21) while the cylinder core (4) moves from its intermediate position (II) into the neutral position (0) in such a manner that the blocking element (21) pivots out of its blocking position (20.2) into the rest position (20.1).

12. The device according to any one of the preceding claims,
**characterised in that**
when the cylinder core (4) moves from its neutral position (0) in the direction of the end position (III), the second end (32) of the switching ring (30) bears against the second stop (15) and at the same time the recess (17) is covered, the first end (31) of the switching ring (30) being at a distance from the first stop (14),
and/or
when the cylinder core (4) moves from the end position (III) into the intermediate position (II), the projection (33) of the switching ring (30) acts as a stop element for the blocking element (21) to move the switching ring (30) in the direction of the first stop (14) of the control member (10), as a result of which at the same time the second end (32) of the switching ring (30) leaves the recess (17) and the blocking element (21) moves into the recess (17).

13. The device according to any one of the preceding claims,
**characterised in that**
the recess (17) is configured with a blocking face (17.2), against which the blocking element (21) bears when the cylinder core (4) is in the intermediate position, in such a manner that the cylinder core (4) is blocked from moving again in the direction of the end position (III).

14. The device according to any one of the preceding claims,
**characterised in that**
the cylinder core (4) has a key channel (4.2) into which a key can be inserted, wherein the cylinder core (4) has an internal end face (4.3), which faces away from an external end face (4.4), at which the key can be introduced, of the cylinder core (4), wherein the internal end face (4.3) is functionally connected to the switch (40),
and/or
the restart block (20) is effective in the region of the internal end face (4.3) of the control member (10).

## Revendications

1. Dispositif d'asservissement d'un organe de verrouillage (1) d'une colonne de direction (2) d'un véhicule automobile, avec
un cylindre de serrure, qui présente un boîtier (3) et une âme cylindrique (4) reçue dans ce boîtier et rotative autour d'un axe (4.1), qui est rotative à partir d'une position neutre (0) dans d'autre positions (I, II, III) angulairement décalées les unes par rapport aux autres, comme une position intermédiaire (II) et une position finale (III),
un organe de commande (10), qui est couplé mécaniquement à l'organe de verrouillage (1) de telle sorte que, par la rotation de l'âme cylindrique (4) autour du premier axe (4.1), l'organe de verrouillage (1) peut être déplacé entre une position de verrouillage et une position de déverrouillage,
un commutateur (40), qui détermine différents états de fonctionnement du véhicule automobile en fonction de la position de l'âme cylindrique (4), sachant que le moteur du véhicule est actif dans la position intermédiaire (II), après qu'un allumage du moteur du véhicule ait précédemment eu lieu dans la position finale (III),
et un système (20) de protection contre les démarrages répétés, qui agit sur l'âme cylindrique (4) lorsque le moteur du véhicule est activé, empêchant ainsi une nouvelle rotation de l'âme cylindrique (4) dans la position finale (III),
**caractérisé en ce que**
le système (20) de protection contre les démarrages répétés comprend exclusivement un élément de blocage (21), sachant que le système (20) de protection contre les démarrages répétés est disposé coaxialement à l'âme cylindrique (4) ainsi qu'à l'organe de commande (10) et s'étend en arc autour de l'organe de commande (10).

2. Dispositif selon la revendication 1,
**caractérisé en ce que**
l'élément de blocage (21) est monté à pivotement autour d'un deuxième axe (20.3) distant du premier axe (4.1).

3. Dispositif selon l'une des revendications précédentes,
**caractérisé en ce que**,
dans la position neutre (0) de l'âme cylindrique (4), l'élément de blocage (21) se trouve dans une position de repos (20.1),
dans la position intermédiaire (II) et/ou dans la position finale (III) de l'âme cylindrique (4), l'élément de blocage (21) se trouve dans une position de verrouillage (20.2),
sachant que l'organe de commande (10) est réalisé avec un contour (11) qui agit sur l'élément de blocage (21) pendant le déplacement de l'âme cylindrique (4) dans sa position respective (0, I, II, III), de sorte que l'élément de blocage (21) se déplace de la position de repos (20.1) dans la position de verrouillage (20.2) dans une direction qui est dirigée pour l'essentiel vers le premier axe (4.1) de l'âme cylindrique (4).

4. Dispositif selon l'une des revendications précédentes,
**caractérisé en ce que**
l'âme cylindrique (4) et l'organe de commande (10) forment une même pièce, ou bien l'âme cylindrique (4) est liée en rotation à l'organe de commande (10).

5. Dispositif selon l'une des revendications précédentes,
**caractérisé en ce que**
le système (20) de protection contre les démarrages répétés est réalisé en plusieurs parties, sachant qu'un élément arqué (22) à effet de ressort agit sur l'élément de blocage (21).

6. Dispositif selon l'une des revendications précédentes,
**caractérisé en ce que**
l'élément de blocage (21) est réalisé sous la forme d'un élément à effet de ressort qui s'étend en arc autour de l'organe de commande (10).

7. Dispositif selon l'une des revendications précédentes,
**caractérisé en ce**
**qu'**une bague de commutation (30) est disposée à déplacement sur l'organe de commande (10), en particulier en ce que l'organe de commande (10) est réalisé, sur sa région de bord (12) qui est tournée vers l'élément de blocage (21), avec un évidement (13) dans lequel la bague de commutation (30) est montée à déplacement, sachant notamment que l'évidement (13) présente une rainure (13.1) dans laquelle la bague de commutation (30) s'enfonce par une région de pied (30.1), et/ou sachant notamment que la bague de commutation (30) présente une saillie (33) s'étendant radialement vers l'extérieur.

8. Dispositif selon l'une des revendications précédentes,
**caractérisé en ce que**
l'âme cylindrique (4) est sollicitée par ressort de telle sorte que, pendant le déplacement de l'âme cylindrique (4) entre la position neutre (0) et les positions respectives (I, II, III), un couple qui opère en direction de la position neutre (0) agit sur l'âme cylindrique (4).

9. Dispositif selon l'une des revendications précédentes,
**caractérisé en ce que**
l'évidement (13) de l'organe de commande (10) présente une première butée (14) et une deuxième butée (15), sachant que la bague de commutation (30) présente une première extrémité (31) et une deuxième extrémité (32), sachant que la première extrémité (31) de la bague de commutation (30) est tournée vers la première butée (14) et la deuxième extrémité (32) de la bague de commutation (30) vers la deuxième butée (15), sachant que l'évidement (13) n'est que partiellement rempli par la bague de commutation (30).

10. Dispositif selon l'une des revendications précédentes,
**caractérisé en ce que**
l'organe de commande (10) présente un ergot (18) s'étendant radialement vers l'extérieur, qui s'applique dans la position neutre (0) et dans la position finale (III) contre une butée (5.1, 5.2) du boîtier (3),
et/ou **en ce que** l'organe de commande (10) est réalisé avec un espace libre (16) ouvert d'un côté, dans lequel s'enfonce l'élément de blocage (21) dans la position finale (III) de l'âme cylindrique (4).

11. Dispositif selon l'une des revendications précédentes,
**caractérisé en ce que**
l'organe de commande (10) présente sur sa région de bord (12) une échancrure (17) dans laquelle s'étend l'élément de blocage (21) dans la position intermédiaire (II) de l'âme cylindrique (4), en particulier **en ce que** l'échancrure (17) présente une came de commande (17.1) qui, pendant le déplacement de l'âme cylindrique (4) de sa position intermédiaire (II) dans la position neutre (0), agit sur l'élément de blocage (21) de telle sorte que l'élément de blocage (21) pivote de sa position de verrouillage (20.2) dans la position de repos (20.1).

12. Dispositif selon l'une des revendications précédentes,
**caractérisé en ce que**,
lors d'un déplacement de l'âme cylindrique (4) depuis sa position neutre (0) en direction de la position finale (III), la bague de commutation (30) s'applique par sa deuxième extrémité (32) contre la deuxième butée (15) et l'échancrure (17) est en même temps couverte, sachant que la première extrémité (31) de la bague de commutation (30) est distante de la première butée (14),
et/ou **en ce que**, lors du déplacement de l'âme cylindrique (4) de la position finale (III) dans la position intermédiaire (II), la saillie (33) de la bague de commutation (30) sert d'élément de butée pour l'élément de blocage (21) pour déplacer la bague de commutation (30) en direction de la première butée (14) de l'organe de commande (10), de sorte que, simultanément, la bague de commutation (30) quitte par sa deuxième extrémité (32) l'échancrure (17) et l'élément de blocage (21) s'enfonce dans l'échancrure (17).

13. Dispositif selon l'une des revendications précédentes,
**caractérisé en ce que**
l'échancrure (17) est réalisée avec une surface de blocage (17.2) contre laquelle s'applique l'élément de blocage (21) dans la position intermédiaire (II) de l'âme cylindrique (4) de telle sorte qu'un nouveau déplacement de l'âme cylindrique (4) en direction de la position finale (III) est empêché.

14. Dispositif selon l'une des revendications précédentes,
**caractérisé en ce que**
l'âme cylindrique (4) présente un canal de clé (4.2) dans lequel peut être insérée une clé, sachant que l'âme cylindrique (4) présente une surface frontale intérieure (4.3) qui est opposée à une surface frontale extérieure (4.4), où la clé peut être introduite, de l'âme cylindrique (4), sachant que la surface frontale intérieure (4.3) est en liaison fonctionnelle avec le commutateur (40),
et/ou **en ce que** le système (20) de protection contre les démarrages répétés agit dans la région de la surface frontale intérieure (4.3) de l'organe de commande (10).
